# EUROPEAN PATENT APPLICATION

(11) **EP 4 369 152 A1**
(43) Date of publication of application: **15.05.2024**
(21) Application number: 22206428.9
(22) Date of filing: 09.11.2022
(51) Int. Cl.: G06F 3/01, G02B 27/01

(54) **LATENCY REDUCTION METHOD AND DEVICE**

(71) Applicant: ADJUVO MOTION B.V., 2629 JD Delft (NL)
(72) Inventor: LUIJTEN, Johannes, s-Gravenhage (NL); LAMMERS, Max, Delft (NL)
(74) Representative: Hoyng Rokh Monegier B.V.

(57) **Abstract**

The present invention discloses a user interface device for interaction with an object, such as a real or virtual object, which is perceived within an environment, such as a real-, virtual-, augmented- and/or mixed-reality environment. The user interface device is arranged to provide feedback based on the interaction, wherein the user interface device comprises a transceiver configured to receive a threshold information from an external computational device. It also comprises a sensor that measures spatial information of the user interface device and outputs sensor data based on the measured spatial information. The user interface device additionally comprises a computing unit that compares sensor data with the threshold information, so as to determine whether audio and/or haptic feedback needs to be provided to the user. Lastly, the device comprises a feedback device that provides feedback to the user based on the comparison between the sensor data and the threshold information.

## Description

### TECHNICAL FIELD

The disclosed technology relates generally to haptic technology, and more particularly to methods for reducing latency in user interface devices, e.g. haptic interface devices.

### BACKGROUND

Haptic technology, also known as kinaesthetic communication or 3D touch, refers to any technology that can create an experience of touch by applying forces, vibrations, or motions to the user. These technologies can be used for example to create virtual objects in a computer simulation, to control or interact with virtual objects, and to enhance remote control of machines and devices (telerobotics). Simple haptic devices are common in the form of game controllers, joysticks, and steering wheels.

An example of haptic technology is a user interface device, which is used to perceive an object that does not occur within the same space or even the same reality as the wearer. Forms of feedback that the user can receive from the interaction with the object are for example force-, vibrotactile-, cutaneous-, kinaesthetic-, haptic-, temperature-, optic-, olfactory-, and/or sound feedback.

A user interface device could be for example a haptic feedback glove, which puts out a certain amount of resistance once the user interacts with an object that is not present in the same space or in the same reality as the wearer. Thus, virtual objects can be seemingly touched with this technology, making these objects and the interactions the user has with them seem more real. One example of a haptic feedback glove is the SenseGlove Nova.

Properties, such as e.g. position, size and interaction parameters, of these objects that the user interacts with are commonly kept track of by a process running on a computational device such as a desktop computer (PC) or a standalone virtual reality (VR) headset (e.g. Oculus Quest 2). In the case of a virtual-, augmented-, or mixed reality environment wherein the user perceives the object, the computational device often also computes any updates to that environment. To achieve these and other tasks such as rendering, the computational device requires processing power and is often provided as a separate, stand-alone, external computational device next to the user interface device.

In most applications of user interface devices, at least one or more sensors on the device is used to translate user input into a digital signal which is used in the process running on the computational device. It is the computational device (or more accurately, the program running on it) which determines the effect this input has on the digital representation, and whether or not a feedback signal is required.

In these applications, any delay between, on the one hand, the moment a user is supposed to obtain feedback from the interaction with the object (instigated e.g. by the movement of (parts of) the interface device or by the movement of the object) and, on the other hand, the feedback device (e.g. one or more actuators) of the interface device simulating the appropriate feedback response reduces the perceived fidelity of said device and decreases the level of immersion. Furthermore, in some cases, it can be detrimental to a task that needs to be performed with precision, for example where a timely reaction by the user is required.

In known applications, communication between the interface device and the computational device introduces a latency between the moment a user is supposed to obtain feedback from the interaction with the object and the feedback device of the interface device simulating the appropriate feedback response. Most notably, wireless communication methods such as Bluetooth introduce a 10-15ms delay when transmitting information from one device to another, see *"Minimum delay bound in Bluetooth transmissions with serial port profile"* by Moron et al. Human arms are for example found to be able to move significant distances within this time window, which makes this a significant influencing factor in the perceived fidelity of such devices.

If the creator of the interface device is not also the creator of the computational device, they are dependent solely on the communication methods that are available with the computational device. The Bluetooth protocol is widely used by these computational devices as the main way to communicate with third party interface devices, and is sometimes the only way to communicate. Traditional wired (cable-based) communication is becoming less common as time passes. Also with wired communication, the problem of latency persists, since the processing and subsequent signalling from the computational device to the interface device takes time.

Transmitting the entire representation present on the computational device to an interface device would increase the transfer rate needed between the computational device and the one or more interface devices. This is like a traditional client-server based approach, where each interface device ("client") could keep track of a copy of the simulation, and receives updates from the computational device ("server") to update their own representation of the digital world.

Still, having the interface device keep track of an entire digital world requires more processing power compared to the computational device sending only e.g. a haptic command. Furthermore, the size of these update messages should be as short as possible to reduce the delay from sending and receiving the full message. This becomes even more problematic when a significant amount of updates are placed in one message.

One could argue that running the simulation on the interface device itself, possibly by integrating it into the computational device, would remove the need for wired- or wireless communication, and therefore the latency introduced by such communication methods. While that will solve the problem in theory, in practice there are three factors that make this approach unsuited for the application of interface devices, and that should be considered for any application of interface devices: running multiple devices, the physical distance between device and operator, and technological limitations.

Commonly, one or more of these interface devices are used in combination with a computational device at one time. In the case of both gloves and controllers, two interface devices are used to allow the user to interface with the digital world using their left- and right hand. These devices are usually able to be moved independently of one another, usually without a physical, wired connection between them which would restrict their movement.

In some cases, the goal of using an interface device is not to interact with a virtual environment, but rather with a physical one. For example, a physical environment which is not within the same location as where the wearer is situated, in particular operating a robotic gripper remotely to interact in physical environments that would be hazardous to humans being a prime example. Wired connections to such a robotic gripper are limited by the length of the cable, while an internet connection could be used to control devices at significant distances, at the cost of latency, of course.

Keeping track of an entire digital representation of a world is demanding in terms of computational power, graphical processing power, electrical power supply, and memory size; both for storage and buffering. Significant technological improvements have been made to minimize such technology. In the case of the Oculus Quest 2, the components to render a virtual world fit inside a product of 191.5 x 102 x 142.5 mm, weighing approximately 0.5kg. The size of components is expected to decrease as time passes. But in the context of wearable interface devices, it is not feasible to add these components on top of the hardware to sense movement and to generate physical feedback.

The present invention aims to reduce the latency issues arising between an external computational device and an interface device. In particular, the present invention aims to reduce the effect of wireless communication methods on the latency between the moment a user is supposed to obtain feedback from the interaction with the object and the feedback device of the interface device simulating the appropriate feedback response.

### SUMMARY

To address the above discussed drawbacks of the prior art, there is proposed, according to a first aspect of the disclosure, a user interface device for interaction with an object, such as a real or virtual object, which may be perceived within an environment, such as a real-, virtual-, augmented- and/or mixed-reality environment. The user interface device may be arranged to provide feedback based on the interaction, wherein the user interface device may comprise a transceiver configured to receive a threshold information from an external computational device. It also may comprise a sensor that measures spatial information of the user interface device and outputs sensor data based on the measured spatial information. The sensor may comprise for example one or more of an inertial-, spatial-, position sensor, an encoder, a potentiometer, a draw wire sensor, an accelerometer, a sensor for measuring rotation, or an inertial measurement unit; any suitable sensor that can obtain information on the movement, position and state of the body part can be used. The user interface device may additionally comprise a computing unit that compares sensor data with the threshold information, so as to determine whether audio and/or haptic feedback needs to be provided to the user. The threshold information may indicate for which measured sensor data the feedback device should give feedback to the user. Lastly, the device may comprise a feedback device that provides feedback to the user based on the comparison between the sensor data and the threshold information. The feedback device can be an actuator, a light emitter, a sound emitter, a vibro-tactile element, a force generating type such as a motor or a servo or an electro-active polymer or a shape memory alloy, a resistance generating type such as an electromagnetic brake, a pump, a linear actuator, or any other compatible actuator e.g. one that can be coupled to a body part of the user.

Because the user interface device has received the latest threshold information from the external computational device, the interface device can itself control when a feedback, such as haptic feedback, is needed. In other words, it is no longer necessary for the external computational device to determine whether a feedback signal is required.

In such a way, the delay between, on the one hand, the moment a user is supposed to obtain feedback from the interaction with the object (instigated e.g. by the movement of (parts of) the user interface device or by the movement of the object) and, on the other hand, the feedback device (e.g. one or more actuators) of the user interface device simulating the appropriate feedback response is eliminated, or at least greatly reduced. Thus, this enhances, the perceived fidelity and the level of immersion of the user interface device according to the invention in comparison with interface devices known in the art. Furthermore, in cases, where precision is required, the present invention helps in overcoming latency which might cause problems in reaching the necessary precision.

In an embodiment of the above aspect, the transceiver may further be configured to transmit the sensor data to the external computational device such that the threshold information may be updated remotely at the external computational device based on the transmitted sensor data. In this way, the external computational device may update the threshold information available at the user interface device. The external computational device may keep track of a virtual representation of a world outside of the perception of the interface device. The external computational device may update a virtual representation of the movement read by the sensor comprised in the user interface device, as received from the user interface device. Updating this representation first ensures that the next step; prediction, is working with the latest sensor data from the user interface device, and which thus represents the latest state of the body part of the user that is being measured by the sensor. A representation of the user interface device within the external computational device may be used to determine if there are any objects nearby that would require a feedback response. Because the full movement range of the parts of the user interface device that are linked to its sensors may be known, prediction algorithms may be used to determine if a trigger for a haptic response will be encountered within this range of motion, and at which location or at which time this trigger will occur. The result may be the location of a feedback trigger, e.g. a haptic trigger, in 3D space. This location may be encoded into a message that can be sent back to the interface device, in a format that the interface device understands. Hence, in this way new threshold information may be obtained that can be shared with the interface device.

. The user interface device may store this threshold information, such that the threshold information can be retrieved and compared against the latest sensor value(s) when needed. Because the user interface device may have the latest threshold information saved locally at the user interface device, the user interface device can itself control when a feedback, such as haptic feedback, is needed. In other words, it is no longer necessary for the computational device to determine whether a feedback signal is required.

In another embodiment of the above aspect, the transceiver may receive the updated threshold information from the external computational device and/or may transmit the sensor data to the external computational device after a pre-determined update time and/or after a spatial movement of the user or of the user interface device.

In another embodiment of the above aspect, the transceiver may transmit the sensor data, upon which the updated threshold information is to be based, to the external computational device after the computing unit has compared the sensor data to the threshold information and after the feedback device has provided feedback based on this comparison.

In another embodiment of the above aspect, the user interface device may be used together with a virtual-, augmented- and/or mixed-reality displaying device in order to display the object.

In another embodiment of the above aspect, the external computational device may keep track of and may update the representation of the environment wherein the object is perceived by the user, preferably wherein the updated threshold information may be obtained by predicting for which sensor data the user should receive feedback from the interaction with the object in the environment, preferably wherein the sensor data for which the user should receive feedback from the interaction with the object may represent a real and/or virtual collision of the user and/or the user interface device with the object.

In another embodiment of the above aspect, the threshold information may comprise a threshold value corresponding to output of the sensor or to a representation of the object within a path predicted by the measured sensor data.

In another embodiment of the above aspect, the comparison between the sensor data and the threshold information may comprise determining whether the sensor data goes beyond a particular limit set by the threshold information.

In another embodiment of the above aspect, the sensor may be at least one of an encoder, a potentiometer, a draw wire sensor, a sensor for measuring acceleration, a sensor for measuring rotation, or an inertial measurement unit. The sensor may measure spatial information in at least one of the three dimensions, preferably wherein the sensor may measure spatial information of a portion of the user interface device.

In another embodiment of the above aspect, the feedback may comprise one or more of force-, vibrotactile-, cutaneous-, kinaesthetic-, haptic-, temperature-, optic-, olfactory-, and/or sound feedback.

To address the beforementioned drawbacks of the prior art, there is proposed, according to a second aspect of the disclosure, a method for interacting with an object, such as a real or virtual object, using a user interface device that may be arranged to provide feedback based on an interaction with the object, wherein the method may comprise: (i) receiving at the user interface device threshold information from an external computational device; (ii) measuring spatial information of the user interface device, and outputting sensor data based on the measured spatial information; (iii) comparing the sensor data with the threshold information, so as to determine whether audio and/or haptic feedback needs to be provided to the user; and (iv) providing feedback to the user based on the comparison between the sensor data and the threshold information. The threshold information may thus indicate for which measured sensor data feedback should be given to the user. Threshold information may indicate a specific state and/or range of states at which a threshold is reached. Threshold information includes, but is not limited to, one-, two-, or three-dimensional spatial information like position, speed, acceleration, further derivatives of position, angles, angular velocity, angular acceleration, further derivatives of angle, distance in meters, pixels, or any other spatial unit, time, Boolean parameters, light intensity, current, pressure, and/or magnetic field strength. Threshold information may be used to determine when and/or where feedback to the user from the interface device should occur. For example, threshold information may indicate a physical and/or virtual space wherein the object exists. The threshold information may be an upper or lower bound on a particular sensor value, arranged such that if a measured sensor value passes the upper or lower bound feedback will be given to the user, for example in the form of haptic feedback.

In an embodiment of the above aspect, the method may further comprise transmitting the sensor data from the user interface device to the external computational device such that the threshold information may be updated remotely at the external computational device based on the transmitted sensor data.

In an embodiment of the above aspect, the method may further comprise receiving at a feedback device a feedback command from the user interface device or the external computational device, upon which feedback is provided to the user. The feedback device can be an actuator, a light emitter, a sound emitter, a vibro-tactile element, a force generating type such as a motor or a servo or an electro-active polymer or a shape memory alloy, a resistance generating type such as an electromagnetic brake, a pump, a linear actuator, or any other compatible actuator e.g. one that can be coupled to a body part of the user. The type of feedback is dependent on the type of feedback device. Preferably, the feedback command may be based on sensor data or an update of an environment, such as a real-, virtual-, augmented- and/or mixed-reality environment, in which the object may be perceived by the user, more preferably wherein an interaction with the object may be due to occur.

In another embodiment of the above aspect, receiving of the updated threshold information from the external computational device and/or transmitting of the sensor data to the external computational device may happen after a pre-determined update time and/or after a spatial movement of the user or of the user interface device.

In another embodiment of the above aspect, the transmitting of the sensor data, upon which the updated threshold information is to be based, to the external computational device may happen after the computing unit has compared the sensor data to the threshold information and after the feedback device has provided feedback based on this comparison.

In another embodiment of the above aspect, the user interface device may be used together with a virtual-, augmented- and/or mixed-reality displaying device in order to display the objects.

In another embodiment of the above aspect, the external computational device may keep track of and may update the representation of the environment wherein the object is perceived by the user, preferably wherein the updated threshold information may be obtained by predicting for which sensor data the user should receive feedback from the interaction with the object in the environment, more preferably wherein the sensor data for which the user should receive feedback from the interaction with the object may represent a real and/or virtual collision of the user and/or the user interface device with the object.

In another embodiment of the above aspect, the threshold information may comprise a threshold value corresponding to output of the sensor or to a representation of the object within a path predicted by the measured sensor data.

In another embodiment of the above aspect, comparing the sensor data and the threshold information may comprise determining whether the sensor data goes beyond a particular limit set by the threshold information.

In another embodiment of the above aspect, the feedback may comprise one or more of force-, vibrotactile-, cutaneous-, kinaesthetic-, haptic-, temperature-, optic-, olfactory-, and/or sound feedback.

To address the beforementioned drawbacks of the prior art, there is proposed, according to a third aspect of the disclosure, a computational device for updating a representation of an environment, such as a real-, virtual-, augmented- and/or mixed-reality environment, wherein a user may perceive an object, such as a real or virtual object, comprising: (i) a transceiver configured to receive the sensor data from a user interface device external to the computational device; (ii) a computing unit that may be configured to update the virtual-, augmented- and/or mixed-reality environment based on the received sensor data, predict for which sensor data the user should receive feedback using the user interface device from the interaction with the object in the environment, and convert the predicted sensor data into threshold information which may be used by the user interface device to determine whether feedback should be provided to the user of the user interface device. The transceiver may be further configured to transmit the threshold information to the external user interface device.

In an embodiment of the above aspect, the sensor data for which the user should receive feedback from the interaction with the object may represent a real and/or virtual collision of the user and/or the user interface device with the object.

In another embodiment of the above aspect, the feedback may comprise one or more of force-, vibrotactile-, cutaneous-, kinaesthetic-, haptic-, temperature-, optic-, olfactory-, and/or sound feedback.

In another embodiment of the above aspect, prediction on where the user should receive feedback from the user interface device may comprise predicting a location on a movement path.

In another embodiment of the above aspect, the predicted location on a movement path is converted into threshold information which may be used by the user interface device to determine whether feedback should be provided to the user of the user interface device.

To address the beforementioned drawbacks of the prior art, there is proposed, according to a fourth aspect of the disclosure, a method for updating a representation of an environment, such as a real-, virtual-, augmented- and/or mixed-reality wherein a user perceives an object, such as a real or virtual object, the method comprising: (i) receive sensor data from a user interface device; (ii) update the environment based on the received sensor data; (iii) predict for which sensor data the user should receive feedback using the user interface device from the interaction with the environment; (iv) convert the predicted sensor data into threshold information which is used by the user interface device to determine whether feedback should be provided to the user of the user interface device; and (v) transmit the threshold information to the external user interface device.

In an embodiment of the above aspect, updating the environment may comprise updating a render of the environment and/or updating the physics of the environment.

In another embodiment of the above aspect, receiving the sensor data and/or transmitting the threshold information may happen after a pre-determined update time and/or after a spatial movement of the user or of the user interface device, preferably wherein the pre-determined update time may change depending on the sensor data that the computational device receives, more preferably wherein the pre-determined update time may change depending on the rate of change of the sensor data.

In another embodiment of the above aspect, the feedback may comprise one or more of force-, vibrotactile-, cutaneous-, kinaesthetic-, haptic-, temperature-, optic-, olfactory-, and/or sound feedback.

### BRIEF DESCRIPTION OF DRAWINGS

Embodiments will now be described, by way of example only, with reference to the accompanying schematic drawings in which corresponding reference symbols indicate corresponding parts, and in which:
FIG. 1 shows an example of a user interface device;
FIG. 2 shows an example of a computational device running a VR simulation and the process;
FIG. 3 shows an example implementation of a VR simulation combined with a glove-like solution as an interface device;
FIG. 4 shows a schematic flowchart that describes those parts of the processes running on the interface device and on the computational device;
FIG. 5 shows an example implementation for determining thresholds in a VR simulation;
FIG. 6 shows another example implementation for determining thresholds in a VR simulation;
FIG. 7 shows another example implementation for determining thresholds in a VR simulation;
FIG. 8 shows another example implementation for determining thresholds in a VR simulation;
FIG. 9 shows an example implementation of a telerobotic use case;
FIG. 10 shows an example implementation of a virtual telerobotic use case;
FIG. 11 shows an example implementation in a telerobotic use case.

### DESCRIPTION OF EMBODIMENTS

Hereinafter, certain embodiments will be described in further detail. It should be appreciated, however, that these embodiments may not be construed as limiting the scope of protection for the present disclosure.

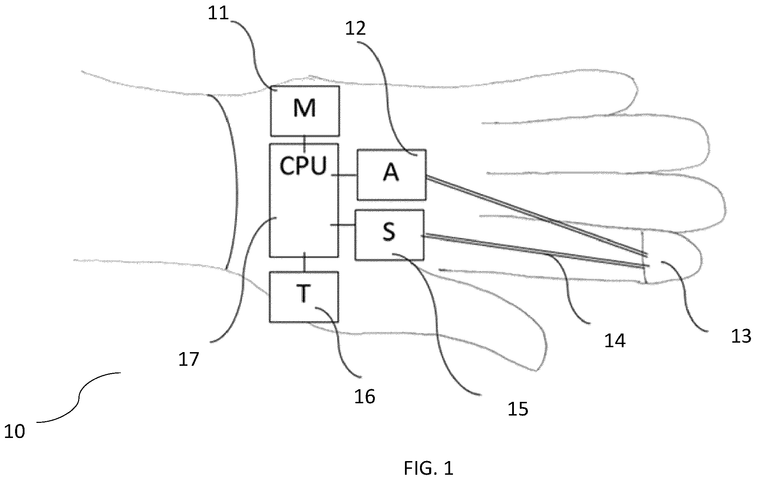

FIG. 1 shows an example embodiment of a user interface device 10 used to interact with objects that do not occur within the same space or even the same reality as the user or wearer. In the example embodiment the user interface device 10 is coupled to a hand of the user, but the user interface device can be configured to be coupled to one or more body parts of the user, not necessarily a hand, but for example a leg, a foot, a torso or a head.

The user interface device 10 includes at least one feedback device 12 for generating some sort of feedback. The feedback device 12 can be an actuator. Some other examples of the feedback device include a light emitter, a sound emitter, a vibro-tactile element, a force generating type such as a motor or a servo or an electro-active polymer or a shape memory alloy, a resistance generating type such as an electromagnetic brake, a pump, a linear actuator, or any other compatible actuator e.g. one that can be coupled to a body part of the user.

The feedback device can either be operated using a driver used for interacting with the feedback device, such as a hardware driver or a software driver, or without using a driver. The driver can make it possible for the feedback device to operate, either by driving it mechanically, or driving it via software inputs.

The feedback device 12 can be coupled to a body part of the user, using connection element 13 and coupling 14. This coupling is used to allow the feedback device 12 to engage with the user, for example to give haptic feedback to the user. This coupling 14 can either be mechanic, pneumatic, electronic, or any other compatible coupling method e.g. one that can transfer the output of the feedback device to the body part of the user connected with the connection element 13.

The connection element may include hook-and-loop fasteners, (one or more parts of) gloves, thimble-like elements, or any other means of connecting coupling 14 to a body part of the user of the user interface device 10. In the present embodiment, the connection element 13 is connected to the user at the tips of one of the fingers of the user. The coupling 14 mechanically couples the connection element 13 to the feedback device 12, for example an actuator. For example, if the feedback device provides haptic feedback to the user, the coupling 14 can pull on the connection element 13.

The coupling 14 can also couple the body part of the user to a sensor unit 15 of the interface device. Since the coupling 14 is coupled to the connection element 13, the sensor unit 15 can measure certain properties of the body part. In this way, the interface device 10 can obtain information on the movement, position and/or state of the body part. The coupling is used to allow sensor 15 to measure, monitor, and/or detect movement of a body part of the user of user interface device 10. An example embodiment of such an implementation may be the detection of finger movement using a coupling device to sensor 15, which is located on the hand, palm, and/or wrist. The coupling 14 to sensor unit 15 does not have to be mechanical, i.e. information of the body part can also be coupled back to the sensor unit via some other means. For example the sensor unit can measure using video images, light, et cetera.

Sensor unit 15 may include for example one or more of an inertial-, spatial-, position sensor, an encoder, a potentiometer, a draw wire sensor, an accelerometer, a sensor for measuring rotation, or an inertial measurement unit. Any suitable sensor that can obtain information on the movement, position and state of the body part can be used. A combination of sensors may also be possible to measure information on the movement, position and state of the body part, each sensor obtaining (e.g. part of) such information.

Sensor unit 15 may be configured to directly measure spatial information, but may also measure other types of information that may indirectly measure spatial information. Such indirectly measured spatial information may include information derived from pressure, light, chemicals, sound, and/or other types of information that can be translated to spatial information by calculations, translations, and/or models. Different types of information may also be combined or used to complement information obtained from other sensors by using sensor fusion methods. In this way, the quality of the spatial information obtained from a single sensor unit 15 may be improved in terms of accuracy, precision, and/or robustness to interference, noise, and/or sensor drift.

Another example embodiment may include integration of feedback unit 12 and sensor unit 15. Such embodiments may include linear actuators, electric motors, and/or other units wherein a feedback element and sensor element are integrated.

The coupling 14, an example of a coupling device, can either be mechanic, pneumatic, electronic, or any other compatible coupling method e.g. one that can transfer the movement of a body part of the user of the user interface device 10 to a sensor 15. The coupling device may be connected to the body using a connection element, which may be similar to connection element 13. The connection element may include hook-and-loop fasteners, (one or more parts of) gloves, thimble-like elements, or any other means of connecting coupling 14 to a body part of the user of the user interface device 10.

The feedback device 12 and/or the sensor unit 15 can be controlled by computing unit 17, used for executing code, calculations, transmitting and receiving data, reading/interpreting sensor data, reading/writing memory, or any other functions that computing units can perform. The computing unit 17 can either be a central processing unit (CPU), microprocessor, microcontroller, or any other compatible computing means.

Computing unit 17 uses memory unit 11 to read and/or write data during operation of the user interface device 10. Memory unit 11 can either be a random-access memory unit (RAM), a solid-state drive (SSD), a hard drive (HDD), a flash unit, or any other means of electronically storing information. In addition, each of the memory unit 11, transceiver unit 16, and computing unit 17 can be integrated together into a single unit.

Among other things, memory unit 11 can contain one or more threshold information, which can be compared to measured values obtained by sensor unit 15. The threshold information can indicate for which measured sensor data the feedback device should give feedback to the user. For example, the threshold information can be an upper or lower bound on a particular sensor value, arranged such that if a measured sensor value passes the upper or lower bound feedback will be given to the user, for example in the form of haptic feedback provided to the user via the feedback device. The threshold information can also indicate a particular bound on a weighted average of multiple sensor values that have been gathered by sensor unit 14. The threshold information can also relate to a state of the body part of the user over time.

Data and/or information can be transmitted and received by computing unit 17, both wired and wirelessly, using transceiver unit 16. Transceiver unit 16 can comprise a separate transmitter and receiver, or a transmitter and receiver which are integrated together.

Transceiver (and receiver) unit 16 can operate using Bluetooth, WiFi, serial communication methods, or any other wired and/or wireless analog or digital communication methods.

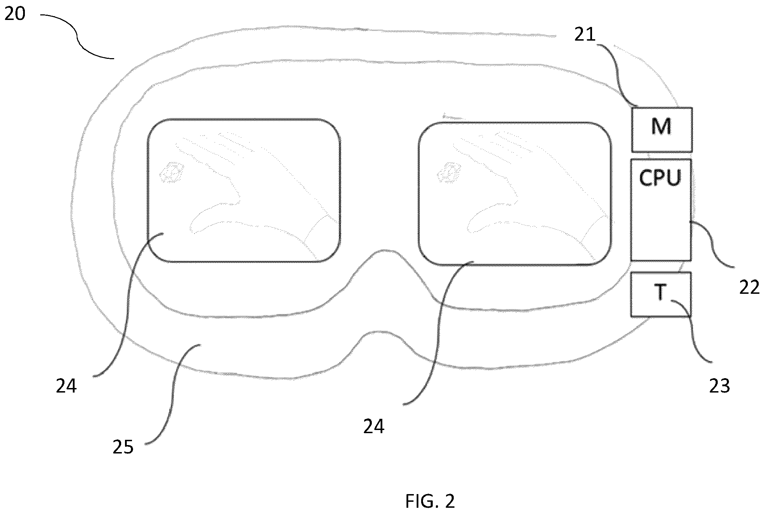

FIG. 2 shows an example embodiment of a computational device 20 running a virtual reality (VR), augmented reality (AR), and/or mixed reality (MR) simulation. The computational device works alongside a VR/AR/MR headset 25, which includes any head-mounted device that provides a means for perception of VR/AR/MR environments for the user. The computational device 20 and the VR/AR/MR headset 25 can be provided as an integrated device or can be provided as separate devices.

VR/AR/MR headset 25 is operated by computing unit 22. The computing unit 22 can perform all computational operations needed for operating the VR/AR/MR headset 25. Operations can include, but are not limited to, generating, updating, and rendering of VR/AR/MR environments, processing of sensor data, prediction of collisions, and generation of threshold information.

Computing unit 22 outputs rendered data to at least one visualization medium 24, which include all means for displaying VR/AR/MR environments to the user. Visualization medium 24 can include displays, screens, projections, or any other means for visually representing VR/AR/MR environments to the user.

Computing unit 22 further utilizes memory unit 21 to read and/or write data during operation of the computational device. Memory unit 21 can either be a random-access memory (RAM) unit, a solid-state drive (SSD), a hard drive (HDD), a Flash unit, or any other means of electronically storing information.

Among other things, memory unit 21 can store sensor data received from user interface device 10. Computational device 20 also includes a transceiver 23 capable of receiving and transmitting data in a wired and/or wireless manner. Among other things, transceiver 23 can be used for receiving sensor data from an external user interface device 10 and transmitting threshold information to the user interface device 10.

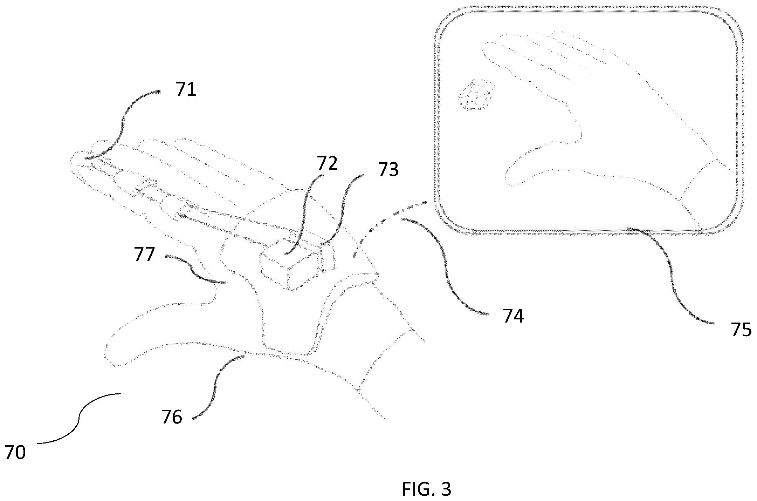

FIG. 3 shows an example implementation 70 of a VR simulation combined with a glove-like solution as an interface device. This example implementation includes a physical hand 77 of a user in a non-virtual environment. The user is further using user interface device 76 to interact with objects that do not occur within the same space or even the same reality as the wearer. In this example implementation the user interface device 76 interacts with a VR/AR/MR environment, which the user perceives through visualization medium 75. This visualization medium may be, but is not limited to, a display, a screen, a projection, and preferably integrated in a VR/AR/MR headset.

Among other things, hand 77 of the user, which exists in the physical world, may be represented by a virtual representation of the same hand. This virtual representation may be a modelled, rendered, and/or simplified version of the physical hand.

Hand 77 of the user, which exists in the physical world, may also not be represented by a virtual representation and be left out of the VR/AR/MR environment. Alternatively, the hand 77 of the user, which exists in the physical world, or indeed any other body part, may also be represented by a virtual representation of a different object and/or a tool. Example tools include hammers, saws, screwdrivers, robotic arms, grippers, and/or welding guns.

Hand 77 of the user, which exists in the physical world, may be used to represent other objects in the physical world, such as a robot hand. Aside from representing objects in the physical world, physical hand 77 of the user may also control, move, engage, actuate, and/or transform objects in the physical world. Physical objects that may represent physical hand of the user may include tools, machinery, grippers, robotic arms, drones, vehicles, and/or other physical objects that can be controlled, moved, engaged, actuated, and/or transformed using a hand or indeed any other body part.

In case the virtual representation of the physical hand 77 of the user collides and/or gets in proximity of an object that exists in the virtual environment shown on visualization medium 75, feedback may be provided to the user using feedback device 72, such as an actuator. Similarly to feedback device 12, feedback device 72 can include a light emitter, a sound emitter, a vibro-tactile element, a force generating type such as a motor or a servo or an electro-active polymer or a shape memory alloy, a resistance generating type such as an electromagnetic brake, a pump, a linear actuator, or any other compatible actuator e.g. one that can be coupled to a body part of the user.

Coupling between the actuator and a body part of the user, which may be the physical hand 77, is achieved through a connection element 71. This connection element forms an interface with the user and may include hook-and-loop fasteners, (one or more parts of) gloves, thimble-like elements, or any other means of connecting actuator 72 to a body part of the user, similarly to before.

Collision between a virtual representation of hand 77 of the user and a virtual object may be registered, measured, and/or detected by one or more sensors 74, which registers, measures, and/or detects the position of the user interface device in the physical world. Sensor 74 may be similar to sensor 15.

An external computational device may be used to transmit threshold information, which may indicate the spatial position of a virtual object, to define spaces wherein the virtual representation of hand 77 may collide with the virtual object. This threshold information may be transmitted in a wired and/or wireless manner using transmission link 74.

In turn, user interface device 76 may use transmission link 74 to transmit sensor data from sensor 73, which may indicate the spatial position of a physical hand 77 of the user. Using transmission link 74: (i) user interface device 76 can provide an external computational device with spatial information of the user interface device 76, (ii) an external computational device can take physical spatial information of the user interface device 76 and translates it into virtual spatial information of the virtual representation of the physical hand 77, and (iii) external computational device can provide user interface device 76 with threshold information on any virtual objects that reside in the virtual environment, in particular those virtual objects which reside within the direct vicinity of the representation of the body part of the user within the environment. What constitutes the direct vicinity depends for example on how many objects the computing device can determine the threshold information on and transmit these to the interface device in a timely manner.

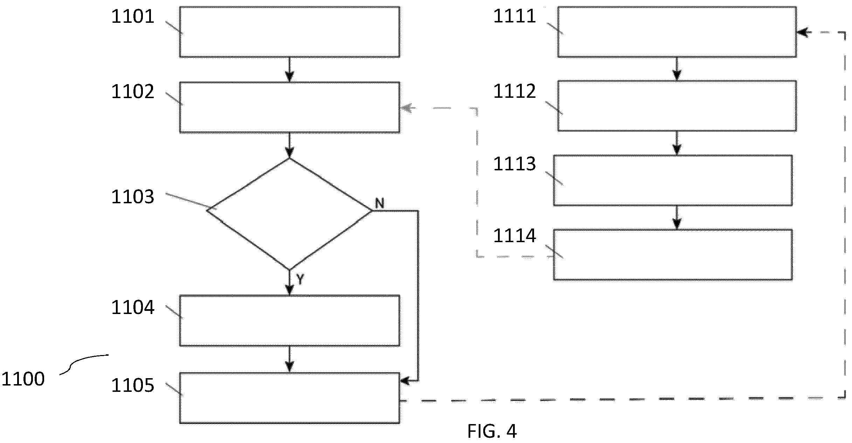

FIG. 4 shows a flowchart that describes those parts of the processes 1100 running on the interface device and on the computational device that are relevant to the present invention. These processes can be running continuously and independently of one another.

At the user interface device, steps 1101-1105 are performed. In step 1101, the interface device collects data from at least one sensor unit comprised in the interface device. Each sensor unit is configured to measure some form of physical movement of parts of the interface device, within a known range. These sensors could be a position sensors or rotation sensor, but may also include e.g. the use of another kind of 1-dimensional capture. Other types of sensors were also mentioned in relation to the previous embodiments, and can equally be used here.

In step 1102, the latest sensor data from the sensor is then compared against the latest threshold information for said sensor, which was received at one point from the computational device (see step 1124 below) via a receiver on the interface device.

Threshold information can be defined as a piece of data that can be used by the interface device to determine whether to activate (or deactivate) a feedback effect (for example a haptic effect) based on readouts of one or more of its sensors. The threshold information can range from a single value that corresponds to a sensor readout, to a full description of the object(s) within the path of the sensor value.

Parameters that modify the behaviour over different ranges of the sensor reading, such as for a 'soft' object that ramps up a force-response the further a user's hands is "inside" the space the object occupies, may also be incorporated in the threshold information.

In step 1103, the computation unit of the interface device determines, whether, when and what to trigger. The determination will vary per type of actuator connected to the interface device. In the case of a Force-Feedback actuator, the threshold information could indicate that a force should be applied when the sensor value is above the threshold, and that the force should be deactivated once back under said threshold. For a vibrotactile actuator, an effect could be played once when the sensor value passes the threshold. For other types of sensors, an entirely different comparison could be required. Effects can be made dependent on speed of the movement captured by the sensor by looking at previous samples of said sensor.

If a new haptic effect or a change in haptic effect is desired as determined by the algorithm described in step 1103, the interface device will send the appropriate signal to the appropriate actuator during step 1104. The means of which is dependent on the actuator itself but will generally be in the form of either a change in direct voltage, a Pulse-Width-Modulation (PWM) signal, or a command sent via an electronic communications protocol such as SPI, I2C or RxTx. If no change in actuator behaviour is required, the process skips step 1104 and continues to step 1105.

After comparing the latest sensor values with the latest threshold values, the device then sends the latest sensor value to the computational device via its transmitter in step 1105. This step should preferably be performed after comparing the latest sensor values against the thresholds in step 1103 and sending any desired haptic effects to the actuators in step 1104. These steps of the process take up time that would otherwise take place between the detection of physical movement and the resulting haptic effect, introducing an additional latency in the system.

Parallel to the process running on the interface device represented by steps 1101-1105, the computational device runs through its own process in steps 1111-1114. Part of this process keeps track of one or more objects that do not exist in the same space or reality as the interface device, but that the interface device should respond to. This process can be implemented within a virtual- or augmented reality simulation, or on the computational device itself, in the case of a telerobotics operation. Furthermore, other devices than the interface device may also interface with the computational device at the same time.

The computational device updates its own internal position tracking in step 1111, be that by updating the virtual world that it is running in, or by reading sensors off its own hardware. In either case, the computational device keeps track of a virtual representation of a world outside of the perception of the interface device. Optionally, this step includes updating a virtual representation of the movement read by the sensor unit(s) comprised in the interface device, as received from the transmitter of the interface device in step 1105. Updating this representation first ensures that the next step; prediction, is working with the latest sensor data from step 1105, and which thus represents the latest state of the body part of the user that is being measured by the sensor unit.

The representation of the interface device within the computational device is used to determine if there are any objects nearby that would require a feedback response. Because the full movement range of the parts of the interface device that are linked to its sensors is known, prediction algorithms in step 1112 can be used to determine if a trigger for a haptic response will be encountered within this range of motion, and at which location or at which time this trigger will occur. One example implementation would be to 'sweep' over the full movement path linked to each sensor, and check if any of the objects that exist only in the computational device's perception are on that path. The result of this step is the location of a feedback trigger, e.g. a haptic trigger, in 3D space.

In step 1113, this location data is encoded into a message that can be sent back to the interface device, in a format that the interface device understands. Hence, in this way new threshold information is obtained that can be shared with the interface device. This can be as simple as sending the entire description of the virtual environment generated by the computational device, or by converting it back into a combination of sensor values that would trigger the response. The latter may require a calibration process that is performed at the start of the simulation.

Finally, the newly obtained threshold information is sent back to the interface device via a transmitter on the computational device in step 1114. The interface device stores this threshold information in a buffer, such that the threshold information can be retrieved and compared against the latest sensor value(s) when needed, e.g. in step 1103 explained above.

Because the interface device has the latest threshold information saved locally at the interface device, the interface device can itself control when a feedback, such as haptic feedback, is needed. In other words, it is no longer necessary for the computational device to determine whether a feedback signal is required.

In such a way, the delay between, on the one hand, the moment a user is supposed to obtain feedback from the interaction with the object (instigated e.g. by the movement of (parts of) the interface device or by the movement of the object) and, on the other hand, the feedback device (e.g. one or more actuators) of the interface device simulating the appropriate feedback response is eliminated, or at least greatly reduced. Thus, this enhances, the perceived fidelity and the level of immersion of the interface device according to the invention in comparison with interface devices known in the art. Furthermore, in cases, where precision is required, the present invention helps in overcoming latency which might cause problems in reaching the necessary precision.

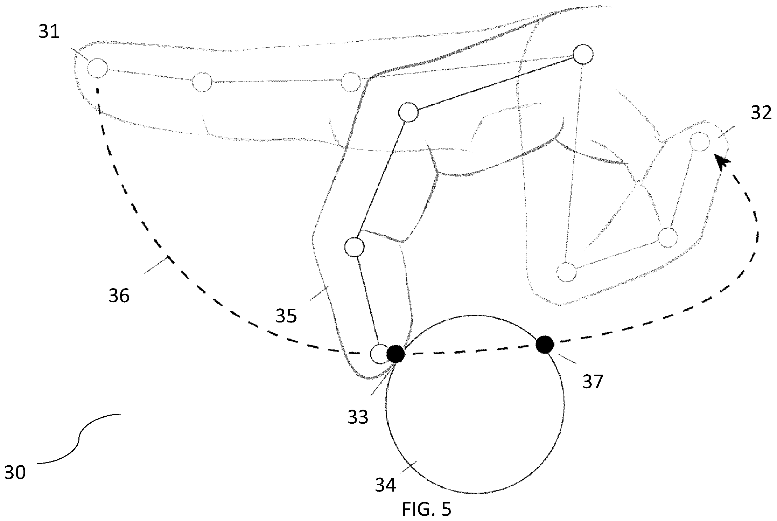

FIG. 5 shows an example implementation for determining threshold information in a VR/AR/MR simulation 30. In this example, the threshold information is determined with respect to a finger 35 of the user, but the threshold information can be determined with respect to any other body part of the user.

The finger can move along a movement path 36, with a start position 31 and an end position 32. The sensor unit of the user interface device can measure the movement of the finger and help by its measurement in determining the movement path. Furthermore, the sensor unit can determine the location of the body part along the movement path. The path can furthermore have an end position 32, which the sensor unit can help determine by means of its measurements. The start position 31 denotes the start position of a particular trajectory of the body part 35, while end position 32 denotes the end point of the trajectory.

Both start point 31 and end point 32 of a path can be mapped by the at least one sensor 15 of user interface device 10, meaning that both the start- and end- positions of the path are measured and/or identified by the sensor 15. As an alternative, the start and end points of particular trajectories or the full trajectories can be known beforehand, but the sensor only measures the location of the body part along the movement path.

Sensor 15 of user interface device 10 is also capable of measuring and/or identifying the outline of path 36, which indicates the trajectory taken by a body part 35 of a user of the user interface device 10 between start position 31 and end position 32. Inside path 36 lies virtual object 34. A virtual object can include any object in a VR/AR/MR environment that is not physical. Whereas the user of user interface device 10 is freely able to move body part 35 along path 36 in the physical world, it does collide with virtual object 34 in the virtual world. To simulate touch, collision, and/or any other means of physically perceiving a virtual object, virtual object 34 requires a feedback response, which can include force-, vibrotactile-, cutaneous-, kinaesthetic-, haptic-, temperature-, optic-, olfactory-, and/or sound feedback.

Feedback ON position 33 can be identified as being a location where a haptic and/or audio feedback response should occur. Similarly, feedback OFF position 37 can be identified as being a location where a haptic and/or feedback response should stop occurring.

Start position 31, end position 32, feedback ON position 33 and feedback OFF position 37, as well as any other position on path 36, can be used to generate threshold information. As mentioned above, threshold information indicates a specific state and/or range of states at which a threshold is reached. Threshold information includes, but is not limited to, one-, two-, or three-dimensional spatial information like position, speed, acceleration, further derivatives of position, angles, angular velocity, angular acceleration, further derivatives of angle, distance in meters, pixels, or any other spatial unit, time, Boolean parameters, light intensity, current, pressure, and/or magnetic field strength.

Threshold information can be used to determine when and/or where feedback to the user from the interface device should occur.

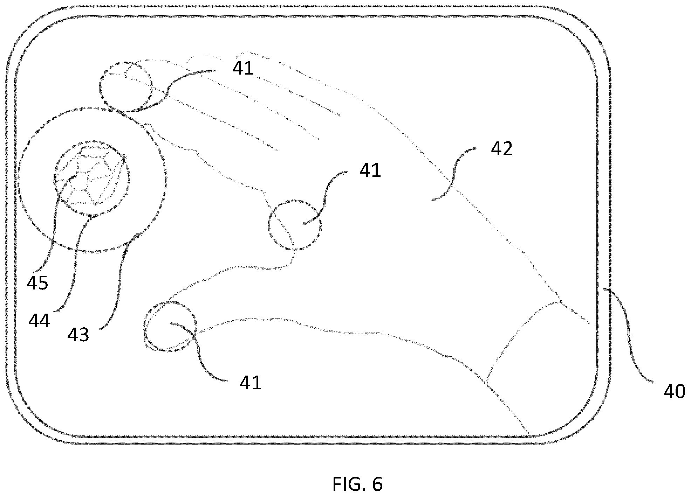

FIG. 6 shows another example implementation for determining thresholds in a VR/AR/MR simulation. Visualization medium 40 displays a visual representation of a virtual and/or physical environment to the user. Examples of visualization mediums 40 include, but are not limited to, displays, screens, projections, preferably integrated in a VR/AR/MR headset.

In this example implementation, visualization medium 40 visualizes virtual hand 42, which can be a virtual representation of a physical hand, preferably a virtual representation of a physical hand of the user that is using the visualization medium 40. The visualization medium 40 can also visualizes a virtual object 45, which can also be a virtual representation of a physical object.

In the above example implementation, virtual object 45 comprises a collision volume 44. This collision volume 44 indicates a spatial space wherein virtual hand 42 collides with virtual object 45. The spatial space that this collision volume 44 spans can be expressed in any set of suitable spatial parameters, such as coordinates and/or distance to a reference point. The collision volume 44 can have any suitable shape, such as a disc, a sphere, a cube, a rectangle, et cetera.

Aside from comprising a collision volume 44, virtual object 45 may additionally comprise a proximity volume 43. Although the two can be identical, proximity volume 43 may also indicate a spatial space wherein virtual hand 42 is close to collision. Proximity volume 43 may therefore be used to indicate a region that induces and/or provokes a different type of haptic and/or audio feedback, than is induced and/or provoked by intersecting with a collision volume 44. Defining one or more proximity volumes 43 in addition to a collision volume 44 enables different types, stages, steps, and/or degrees of for the same virtual object 45, and results in a more real and dynamic interaction with the object.

A user volume 41 may indicate a volume in which (at least part of) a body part of a user is located. Single or different types, stages, steps, and/or degrees of feedback may be triggered by, among others, intersection of and/or proximity to a user volume 41 located on the virtual hand 42 and a collision volume 44 and/or proximity volume 43. Intersection between and/or proximity of user volume 41 and a collision volume 44 and/or a proximity volume 45 may be registered, measured, and/or detected by one or more sensors, such as sensor 15.

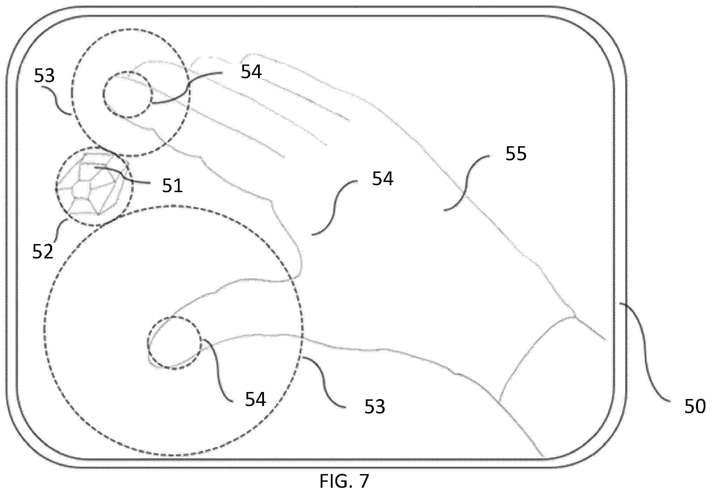

FIG. 7 shows another example implementation for determining thresholds in a VR/AR/MR simulation. This example implementation includes visualization medium 50, which can be similar to visualization medium 40. It also includes a virtual object 51, similar to virtual object 45, a collision volume 52 of the virtual object, similar to collision volume 44, virtual hand 55, similar to virtual hand 42, and user volume 52 on the virtual hand, similar to user volume 41.

Unique about the example implementation of FIG. 7 is that, aside from having a user volume 52, virtual hand 55 may additionally have its own user proximity volume 53. Similarly to how proximity volumes and collision volumes can indicate different regions of interaction with the virtual objects 51, the same applies to user proximity volumes and user volumes for virtual hands 55. Furthermore, intersection with and/or proximity to user volumes 54 and user proximity volumes 53 can induce and/or provoke different types, stages, steps, and/or degrees of haptic and/or audio feedback.

As an example, providing feedback based on multiple defined collision volumes, user volumes, proximity volumes and/or user proximity volumes for virtual objects and body parts can simulate an object being soft, squeezy, malleable, and/or elastic.

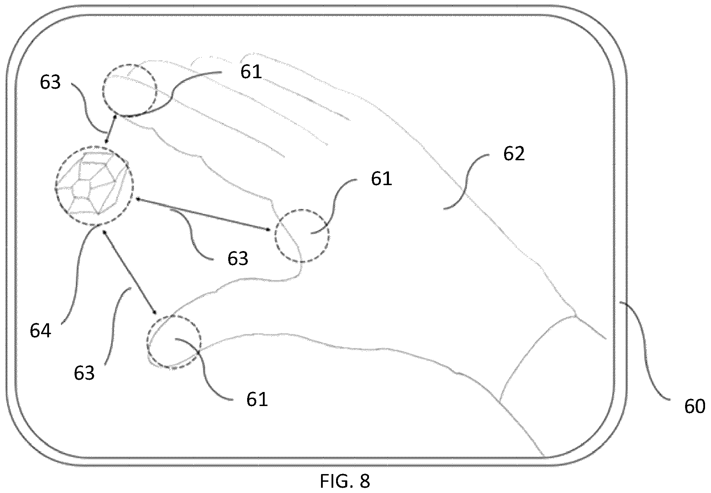

FIG. 8 shows another example implementation for determining threshold information in a VR/AR/MR simulation. This example implementation includes visualization medium 60, which can be similar to visualization medium 40. It also includes a collision volume 64 of a virtual object, virtual hand 62, and a user volume 61 indicating part of the virtual hand, similar to the previous examples.

A distance 63, which is equal to the distance between user volume 61 of the virtual hand and collision volume 64 of the virtual object can be determined. These distances can be expressed in e.g. spatial units and/or time. Distance 63 describes the distance and/or time that the virtual hand 62 and/or the virtual object needs to travel to come to a collision. Once such a collision occurs, feedback may be provided to the user of the visualization medium 60.

Collision of the virtual hand 62 and a virtual object can be registered, measured, and/or detected using a sensor, for instance sensor 15.

Collision can also be predicted using known positions of the virtual object and/or the virtual hand 62. A prediction of collision can be determined on the computational device, so as to determine the sensor values for which a collision will occur, and hence for determining a threshold value relating to these sensor values. Without registering, measuring, or detecting a collision, feedback can still be directly provided to the user after prediction of a future collision.

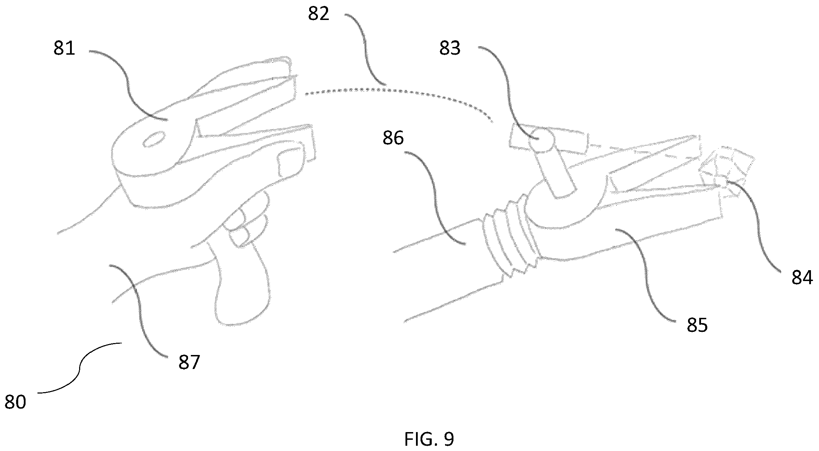

FIG. 9 shows an example implementation of a telerobotic use case 80. This example implementation includes a user, having a hand 87, operating a user interface device 81 which is similar to user interface device 10. User interface device 81 may additionally comprise a control unit used for providing commands, controls, input, and/or actuation to a system.

Examples of control units are, but are not limited to, buttons, switches, levers, joysticks, potentiometers, touchscreens, and/or any other means for providing analog and/or digital commands controls, input, and/or actuation to an electronic system.

User interface device 81 may be capable of wired/wireless transmission 82 and/or receival 82 of data. Data may comprise commands, controls, input, and/or actuation from the control unit of the user interface device 81. Data may be transmitted and/or received from or to the user interface device, a computational device, and/or at least one external device 85.

External devices may include robotic arms, robotic grippers, and/or other devices, tools, and actuators which can be controlled by the user interface device 81, hand 87 of the user, and/or a control unit. Data may additionally include sensor data and/or threshold data of the user interface device 81, the external device 85, and/or a computational device.

External device 85 may comprise a robotic gripper, having a robotic arm 86. Robotic grippers are devices capable of gripping objects using a gripping device, which may comprise at least one gripping member capable of engaging an object 84.

External device 85 may also comprise a sensor 83 for localizing object 84. Sensor 85 may comprise a sensor capable of measuring distance, such as an infrared sensor, ultrasonic sensor, sensors capable of measuring intensity and/or presence of light, LIDAR, radar, depth camera system, and/or any other sensor capable of measuring distance to or localizing an object 84, or determine the objects speed or any other properties which need to be represented. Sensor 83 may be used to localize the object 84 with respect to the external device 85. This localization may additionally be used to generate threshold information that indicates a physical and/or virtual space wherein object 84 exists. Threshold information may be transmitted to the user interface device 81 using wired/wireless transmission 82. Threshold information received in the user interface device 81 may result in feedback, such as e.g. haptic feedback, when the user operates the user interface device 81.

Feedback, such as haptic or audio feedback, experienced by the user of the user interface device 81 may simulate and/or resemble respective engagement of the external device 85 and the object 84. Preferably, feedback may be provided to the user of the user interface device 81 when the external device 85 collides with and/or is in proximity with object 84. Threshold information received in the user interface device 81 may be used to provide feedback when a collision occurs between the space spanned by the threshold information and the user interface device 81, its control unit, hand 87, and/or any other body part of the user. Aside from a collision occurring, feedback may also be provided when the user interface device 81, its control unit, hand 87, and/or any other body part of the user is in proximity with the space spanned by the threshold information. Proximity and/or collision may also not be in direct proximity and/or direct collision, meaning that two objects may also be separated by a certain distance and/or exist within a common virtual environment.

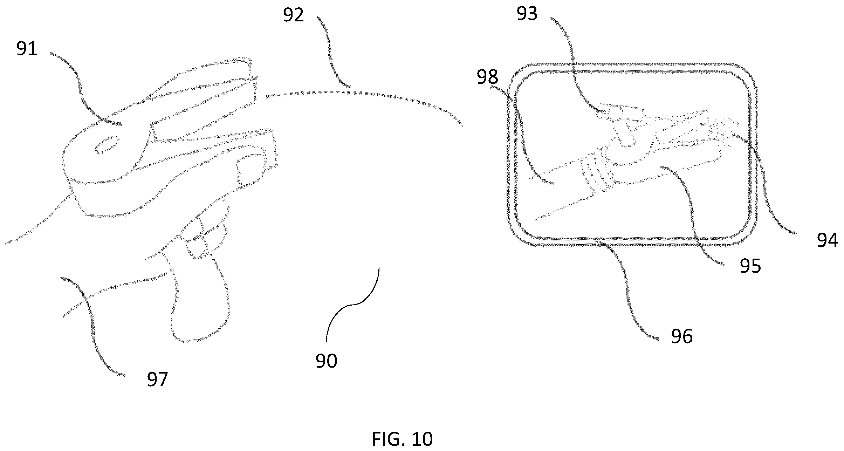

FIG. 10 shows an example implementation of a virtual telerobotic use case 90. The example embodiment of FIG. 10 differs from FIG. 9 in that the external device 85 that the user of the user interface device 81 interacts with is not a physical external device, but a virtual external device 95. This means that the virtual external device 95 may exist in a VR/AR/MR environment and can be perceived through a computational device 96 capable of rendering and/or displaying a VR/AR/MR environment. As such, computational device 96 may comprise a headset, glasses, goggles, screen, display, projection, and/or any other means of rendering and/or displaying a VR/AR/MR environment. The hand of the user 97 that is engaging user interface device 91 may be similar to hand of the user 87.

An example implementation of a virtual telerobotic use case 90 may include the external device 95 to be a virtual robotic gripper connected to a virtual robotic arm 98. The virtual robotic gripper may be similar to, but a virtual variant of, the physical robotic gripper of FIG. 9. The virtual robotic gripper, in this example implementation, interacts with virtual object 94. Virtual object 94 may be similar to, but a virtual variant of, the physical object 84. Interaction between the virtual robotic gripper and virtual object 94 is, among others, enabled by virtual sensor 93. Virtual sensor 93 simulates the measurement, detection, monitoring, extraction, and/or calculation of the distance, time difference, and/or other spatial units between the virtual robotic gripper and virtual object 94. Virtual sensor 93 is preferably an algorithm and/or a computer implementation capable of determining the distance between two or more virtual points and/or bodies.

The example implementation of a virtual telerobotic use case 90 may be similar to the example implementation of FIG.3. Differences between the two example implementations may include user interface device 91 including a control unit, similar to that of the example implementation of FIG. 9., whereas the user interface device 76 does not include a control unit. In this example implementation of a virtual telerobotic use case 90, user interface device 91 comprising a control unit may be used to control the virtual external device 95.

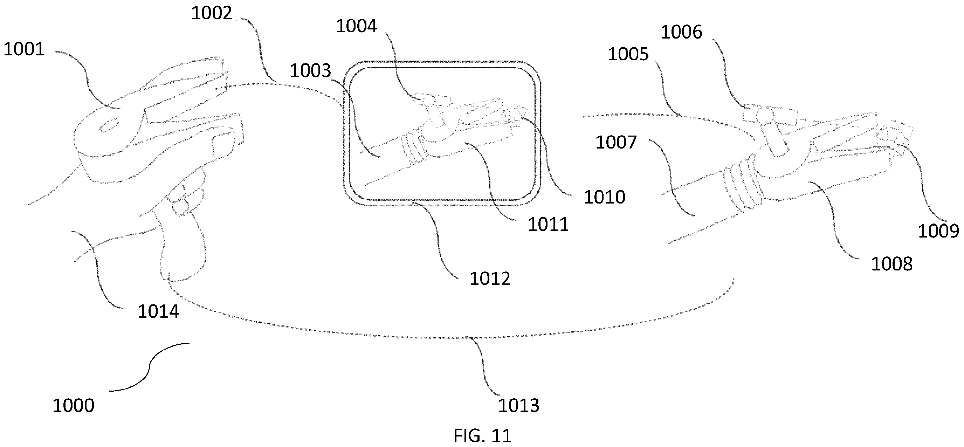

FIG. 11 shows an example implementation in a telerobotic use case where a virtual representation of the robotic gripper, or a camera image generated image by a camera that is recording and/or capturing of the robotic gripper, is displayed to the user via a different computational device. The user thus looks at a virtual representation which shows a virtual robotic arm 1003, virtual proximity sensor or algorithm to detect distance of/to virtual object 1004, virtual robotic gripper 1011, and virtual or camera-generated image of object to be gripped 1010. This virtual representation is a representation or camera-generated image or video of robotic arm 1007, proximity sensor 1006, robotic gripper 1008 and object to be grasped 1009 existing in the real world.

The user interface device 1001 is similar to the one described in the above two example embodiments. The hand 1014 of the user controls the user interface device. The computational device 1012 is configured to render a virtual environment or display camera generated images and comprises means to visualize the rendering. Via a wireless transmission 1002, sensor data can be sent to computational device 1012 and the computational device can send haptic effects, commands, and/or threshold values to the interface device. Commands and/or sensor values are sent via wireless transmission 1005 to the robotic gripper and sensor values are sent to computational device 1012 over this wireless transmission 1005. Sensor values generated by sensor 1006 can be used to determine threshold values for user interface device 1001. Commands and/or threshold values are sent to user interface device 1001 via wireless transmission 1013. Commands and/or threshold values are sent to user interface device 1001 via wireless transmission 1013 directly and sensor values are sent to the robotic gripper directly, effectively circumventing transmission 1005 and 1002. Thus, providing dedicated transmission for haptic feedback and dedicated transmissions for visual feedback. Any wireless transmissions can also be replaced by a transmission using a wire. Any of the embodiments disclosed above may be combined in any appropriate manner.

## Claims

1. A user interface device for interaction with an object, such as a real or virtual object, perceived within an environment, such as a real-, virtual-, augmented- and/or mixed-reality environment, that is arranged to provide feedback based on that interaction, wherein the user interface device comprises:
a transceiver configured to receive a threshold information from an external computational device;
a sensor that is configured to measure spatial information of the user interface device, and wherein the sensor outputs sensor data based on the measured spatial information;
a computing unit that is configured to compare the sensor data with the threshold information, so as to determine whether audio and/or haptic feedback needs to be provided to the user;
a feedback device that provides feedback to the user based on the comparison between the sensor data and the threshold information.

2. The user interface device of any of the preceding claims, wherein the threshold information comprises a threshold value corresponding to output of the sensor or to a representation of the object within a path predicted by the measured sensor data.

3. The user interface device of claim 1 or 2, wherein the transceiver is further configured to transmit the sensor data to the external computational device such that the threshold information is updated remotely at the external computational device based on the transmitted sensor data,
wherein preferably the transceiver is configured to receive the updated threshold information from the external computational device.

4. The user interface device of any of the preceding claims, wherein the transceiver is configured:
- to transmit the sensor data to the external computational device after a pre-determined update time and/or after a spatial movement of the user or of the user interface device;
- to transmit the sensor data, upon which the updated threshold information is to be based, to the external computational device after the computing unit has compared the sensor data to the threshold information and after the feedback device has provided feedback based on this comparison.

5. The user interface device of any of the preceding claims, wherein
- the user interface device is used together with a virtual-, augmented- and/or mixed-reality displaying device in order to display the object; and/or
- the sensor is at least one of an encoder, a potentiometer, a draw wire sensor, a sensor for measuring acceleration, a sensor for measuring rotation, or an inertial measurement unit; and/or
- the sensor measures spatial information in at least one of the three dimensions, preferably wherein the sensor measures spatial information of a portion of the user interface device; and/or
- the feedback comprises one or more of force-, vibrotactile-, cutaneous-, kinaesthetic-, haptic-, temperature-, optic-, olfactory-, and/or sound feedback.

6. The user interface device of any of the preceding claims, wherein the external computational device keeps track of and updates the representation of the environment wherein the object is perceived by the user, preferably wherein the updated threshold information is obtained by predicting for which sensor data the user should receive feedback from the interaction with the object in the environment, preferably wherein the sensor data for which the user should receive feedback from the interaction with the object represents a real and/or virtual collision of the user and/or the user interface device with the object.

7. The user interface device of any of the preceding claims, wherein the computing unit that is configured to compare the sensor data and the threshold information by determining whether the sensor data goes beyond a particular limit set by the threshold information.

8. A method for interacting with an object, such as a real or virtual object, using a user interface device that is arranged to provide feedback based on an interaction with the object, wherein the method comprises:
receiving at the user interface device threshold information from an external computational device;
measuring spatial information of the user interface device, and outputting sensor data based on the measured spatial information;
comparing the sensor data with the threshold information, so as to determine whether audio and/or haptic feedback needs to be provided to the user; and
providing feedback to the user based on the comparison between the sensor data and the threshold information.

9. The method of claim 8, further comprising:
- transmitting of the sensor data from the user interface device to the external computational device such that the threshold information is updated remotely at the external computational device based on the transmitted sensor data, wherein preferably transmitting of the sensor data, upon which the updated threshold information is to be based, to the external computational device happens after the computing unit has compared the sensor data to the threshold information and after the feedback device has provided feedback based on this comparison; and/or
- receiving a direct feedback command from the user interface device or the external computational device, upon which feedback is provided to the user, preferably wherein the direct command is based on sensor data or an update of an environment, such as a real-, virtual-, augmented- and/or mixed-reality environment, in which the object is perceived by the user, more preferably wherein an interaction with the object is due to occur.

10. The method of any one of the claims claim 8-10, wherein
- receiving of the updated threshold information from the external computational device and/or transmitting of the sensor data to the external computational device happens after a pre-determined update time and/or after a spatial movement of the user or of the user interface device; and/or
- comparing the sensor data and the threshold information comprises determining whether the sensor data goes beyond a particular limit set by the threshold information; and/or
- the external computational device keeps track of and updates the representation of the environment wherein the object is perceived by the user, preferably wherein the updated threshold information is obtained by predicting for which sensor data the user should receive feedback from the interaction with the object in the environment, more preferably wherein the sensor data for which the user should receive feedback from the interaction with the object represents a real and/or virtual collision of the user and/or the user interface device with the object; and/or
- the threshold information comprises a threshold value corresponding to output of the sensor or to a representation of the object within a path predicted by the measured sensor data.

11. The method of any one of the claims 11-15, wherein
- the user interface device is used together with a virtual-, augmented- and/or mixed-reality displaying device in order to display the objects; and/or
- the feedback comprises one or more of force-, vibrotactile-, cutaneous-, kinaesthetic-, haptic-, temperature-, optic-, olfactory-, and/or sound feedback.

12. A computational device for updating a representation of an environment, such as a real-, virtual-, augmented- and/or mixed-reality environment, wherein a user perceives an object, such as a real or virtual object, comprising:
a transceiver configured to receive the sensor data from a user interface device external to the computational device;
a computing unit configured to:
update the virtual-, augmented- and/or mixed-reality environment based on the received sensor data;
predict for which sensor data the user should receive feedback using the user interface device from the interaction with the object in the environment;
convert the predicted sensor data into threshold information which is used by the user interface device to determine whether feedback should be provided to the user of the user interface device;
wherein the transceiver is further configured to transmit the threshold information to the external user interface device.

13. The computational device of claim 12, wherein
- the sensor data for which the user should receive feedback from the interaction with the object represents a real and/or virtual collision of the user and/or the user interface device with the object; and/or
- the feedback comprises one or more of force-, vibrotactile-, cutaneous-, kinaesthetic-, haptic-, temperature-, optic-, olfactory-, and/or sound feedback; and/or
- predicting on where the user should receive feedback from the user interface device comprises predicting a location on a movement path, wherein preferably the predicted location on a movement path is converted into threshold information which is used by the user interface device to determine whether feedback should be provided to the user of the user interface device.

14. A method for updating a representation of an environment, such as a real-, virtual-, augmented- and/or mixed-reality wherein a user perceives an object, such as a real or virtual object, the method comprising:
receive sensor data from a user interface device;
update the environment based on the received sensor data;
predict for which sensor data the user should receive feedback using the user interface device from the interaction with the environment;
convert the predicted sensor data into threshold information which is used by the user interface device to determine whether feedback should be provided to the user of the user interface device;
transmit the threshold information to the external user interface device.

15. The method of claim 14, wherein
- updating the environment comprises updating a render of the environment and/or updating the physics of the environment; and/or
- receiving the sensor data and/or transmitting the threshold information happens after a pre-determined update time and/or after a spatial movement of the user or of the user interface device, preferably wherein the pre-determined update time changes depending on the sensor data that the computational device receives, more preferably wherein the pre-determined update time changes depending on the rate of change of the sensor data; and/or
- the feedback comprises one or more of force-, vibrotactile-, cutaneous-, kinaesthetic-, haptic-, temperature-, optic-, olfactory-, and/or sound feedback.
